# FASCICULE DE BREVET EUROPEEN

(11) **EP 2 792 176 B1**
(45) Date de publication et mention de la délivrance du brevet: **28.02.2018**
(21) Numéro de dépôt: 12808767.3
(22) Date de dépôt: 12.12.2012
(51) Int. Cl.: H04W 12/08, H04L 29/06, H04W 48/02, H04W 76/04, H04L 12/24, H04W 4/00

(54) **GESTION DE LA CONNECTIVITÉ D'UN TERMINAL**
VERWALTUNG DER KONNEKTIVITÄT EINES ENDGERÄTS
MANAGING THE CONNECTIVITY OF A TERMINAL

(30) Priorité: 12.12.2011 FR 1161492
(43) Date de publication de la demande: 22.10.2014
(73) Titulaire: Buzzinbees Sas, 38170 Seyssinet Pariset (FR)
(72) Inventeur: LAMBERTON, Marc, F-06600 Antibes (FR); ANSLOT, Michel, F-06250 Mougins (FR); COPPE, Gilles, F-06560 Valbonne (FR); BOUCKAERT, Philippe, F-06410 Biot (FR)
(74) Mandataire: Hautier, Nicolas
(86) Numéro de dépôt international: PCT/EP2012/075282
(87) Numéro de publication internationale: WO 2013/087720

(56) Documents cités:
- EP-A1- 2 192 807
- EP-A1- 2 385 734
- US-A1- 2011 199 905
- "3rd Generation Partnership Project; Technical Specification Group Services and System Aspects; System Improvements for Machine-Type Communications; (Release 11)", 3GPP STANDARD; 3GPP TR 23.888, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V1.1.0, 14 mars 2011 (2011-03-14), pages 1-94, XP050476300,

## Description

Le domaine technique de l'invention est celui des réseaux de communication cellulaires. Plus particulièrement l'invention vise à optimiser l'utilisation des ressources radiofréquences d'un tel réseau en déconnectant un terminal dès que sa connexion n'est plus nécessaire. L'invention est particulièrement avantageuse pour des applications inter machines, où un réseau de communication cellulaire est employé pour communiquer entre des terminaux machines.

Un environnement inter machine fait référence à un environnement comprenant des systèmes, tant filaires que sans fil, permettant de communiquer entre des terminaux machines. Un terminal machine est typiquement un capteur capable de réaliser une mesure. Cette mesure est transmise via le réseau de communication à un autre terminal machine en charge de la compilation de cette mesure avec d'autres mesures en vue de leur traitement.

Les environnements inter machine modernes tirent partie des différents types de réseau de communication existants, et particulièrement des réseaux de communication cellulaires, avantageux du fait de leur importante disponibilité spatiale.

Une particularité d'une communication inter machine est qu'elle nécessite un faible débit par terminal machine : une mesure par exemple peut être transmise sur un simple octet, et selon une période faible, de l'ordre de l'heure ou du jour. Ce débit peut être régulièrement étalé sur une période de temps le plus souvent très longue. Cependant une application inter machine implique le plus souvent un très grand nombre de terminaux machines.

Un terminal machine, à l'instar d'un terminal téléphone, se connecte à une cellule d'un réseau de communication cellulaire, afin de pouvoir transmettre une donnée, telle une valeur d'une mesure réalisée. Le problème vient du fait qu'une cellule ne peut gérer qu'un nombre limité de terminaux connectés simultanément, terminaux téléphones et/ou terminaux machines.

Une cellule est actuellement dimensionnée pour des connexions téléphoniques/voix qui nécessitent un débit important, pendant une durée continue de l'ordre de quelques minutes ou dizaines de minutes. Le modèle de tarification, au volume transmis, est adapté à ce type de connexion, afin qu'il soit profitable pour l'opérateur.

Si tous les terminaux machines, nombreux au sein d'une application inter machine, restent connectés en permanence à une cellule, ceci nécessite une augmentation drastique de la capacité de ladite cellule.

Une augmentation de la taille/capacité d'une cellule, ou de la densité de cellule, afin d'accommoder un nombre très important de terminaux machines d'une application inter machine, ne saurait être compensée par les débits relativement faibles induits par une telle application inter machine, et ne peut être considérée rentable par un opérateur. EP 2 192 807 décrit un procédé de gestion de la connectivité d'un terminal au sein d'un réseau de communication cellulaire.

La présente invention a pour objectif d'apporter une solution à cet inconvénient.

Un objet de la présente invention est un procédé de gestion de la connectivité d'un terminal connectable à un réseau de communication cellulaire, les étapes du procédé étant exécutées directement sur le terminal et étant configurées pour gérer la connectivité dudit terminal selon la revendication 1.

Cette solution permet de gérer la connectivité desdits terminaux, en connectant/déconnectant chaque terminal en fonction des besoins, afin qu'un terminal ne reste pas inutilement connecté lorsqu'il n'a aucune donnée à transmettre.

Cette solution est particulièrement avantageuse comme cela sera détaillé ci-dessous.

Dans le cadre de la présente invention, il s'est avéré que pour faire face à une augmentation du nombre de terminaux tout en conservant une cellule actuelle, il est nécessaire d'adapter le mode de fonctionnement de ladite application inter machine. Un moyen de limiter le nombre de terminaux machines connectés à un instant donné, afin de ne pas dépasser la capacité instantanée d'une cellule, consiste à ne pas connecter en même temps un nombre trop important de terminaux machines. Ceci peut être avantageusement réalisé en ne connectant un terminal machine que durant une période nécessaire à la transmission des données.

Pour cela il convient de gérer la connectivité desdits terminaux afin d'interrompre la connexion du terminal lorsque les données ont déjà été transmises ou lorsque les prochaines donnés ne seront pas transmises avant une longue période de temps, typiquement avant une période de temps de plusieurs minutes.

Une solution envisagée dans le cadre du développement de la présente invention consiste à gérer la connectivité d'un terminal connectable au réseau de communication cellulaire depuis le réseau de communication cellulaire. Dans ce cas un module du réseau est en charge, de déconnecter un terminal lorsque ce dernier est inactif. Pour ce faire, ledit module envoie un message de signalisation, en anglais « signalling message », commandant une déconnexion, au(x) module(s) du réseau en charge de gérer la connexion avec le terminal. Ainsi, par exemple dans un réseau GSM, le module en charge de gérer la liaison radio avec un terminal, le module contrôleur de station de base, en anglais « base station controlér » ou BSC reçoit une telle commande et déconnecte alors le terminal.

Une telle approche est relativement satisfaisante mais présente certaines limitations identifiées dans le cadre du développement de la présente invention. En particulier, il s'est avéré qu'une telle approche entraîne une charge importante pour ledit module qui peut être amené à gérer un nombre important de terminaux. De plus une telle approche implique presque obligatoirement une approche centralisée. De plus un tel module est souvent mal placé pour savoir quand il convient de déconnecter un terminal. En effet le module n'a aucun moyen de savoir si le terminal s'apprêté ou non à envoyer une donnée. De plus, une telle approche est dissymétrique en ce qu'un terminal se connecte lorsqu'il a une donnée à transmettre, mais c'est le module qui décide de l'instant de sa déconnexion. Ceci rend difficile une gestion optimale de la connectivité d'un terminal.

Afin de répondre aux limitations de cette première solution, l'invention propose une approche alternative, où la gestion de la connexion/déconnexion est gérée au plus près des besoins, depuis le terminal.

Ainsi, un objet de la présente invention est un procédé, également désigné application logicielle, exécutable par au moins un processeur compris dans un terminal du type connectable à un réseau de communication cellulaire, le procédé étant configuré pour gérer la connectivité dudit terminal. Plus précisément, le procédé exécutable sur le terminal est configuré pour autoriser et pour interrompre la connexion du terminal au réseau.

Une telle application logicielle est avantageuse en ce qu'une fois téléchargée, elle est en mesure de gérer la connectivité du terminal localement depuis ce dernier. Elle est ainsi au meilleur poste pour observer et déterminer les besoins tant de connexion que de déconnexion dudit terminal.

De manière optionnelle mais néanmoins très avantageuse, le procédé effectue également les étapes suivantes si le terminal est déjà connecté au réseau avant les étapes de détermination et d'autorisation :
- l'étape de détermination est effectuée à l'issue de l'envoi de messages ou au bout d'une durée prédéterminée suite à l'envoi de messages, ou à l'issue d'une durée prédéterminée de connexion,
- l'étape d'autorisation provoque : le maintien de la connexion du terminal au réseau si les conditions de configurations requises pour établir une connexion du terminal au réseau sont réunies ou l'interruption de la connexion du terminal au réseau si les conditions de configurations requises pour établir une connexion du terminal au réseau ne sont pas réunies.

Ainsi, lorsqu'il est déjà connecté au réseau, le terminal, de façon autonome et automatique, se déconnecte du réseau lorsque les conditions prédéfinies de déconnexion sont vérifiées.

De manière optionnelle mais néanmoins très avantageuse, le procédé effectue également les étapes suivantes si le terminal n'est pas déjà connecté au réseau:
- l'étape de détermination est précédée d'une étape de détection de messages destinés à être envoyés depuis le terminal à travers le réseau,
- l'étape d'autorisation provoque : l'établissement de la connexion du terminal au réseau uniquement si les conditions de configurations requises pour établir une connexion du terminal au réseau sont réunies.

Ainsi, lorsqu'il n'est pas encore connecté au réseau, le terminal, de façon autonome et automatique, s'y connecte lorsque les conditions prédéfinies de déconnexion sont vérifiées.

De manière facultative, le procédé selon l'invention comprend en outre au moins l'une quelconque des étapes et caractéristiques optionnelles indiquées ci-dessous.
- l'étape consistant à déterminer si des conditions de configurations requises pour établir une connexion du terminal au réseau sont réunies comprend une étape de comparaison d'au moins une condition de profil avec au moins une donnée de contexte disponible au niveau du terminal et qui caractérise le contexte de connexion du terminal au réseau.
- l'étape consistant à déterminer si des conditions de configurations requises pour établir une connexion du terminal au réseau sont réunies comprend la récupération de l'au moins une condition stockée dans un profil mémorisé dans le terminal.
- chaque condition est associée à un paramètre, le paramètre étant pris parmi : une plage horaire définissant au moins une plage horaire où le terminal est autorisé à se connecter au réseau, une plage horaire définissant au moins une plage horaire où le terminal n'est pas autorisé à se connecter au réseau, des jours définissant au moins un jour de la semaine où le terminal est autorisé à se connecter au réseau, des jours définissant au moins un jour de la semaine où le terminal n'est pas autorisé à se connecter au réseau, un nombre d'essais définissant un nombre de tentatives autorisées lors d'un échec d'une tentative de connexion.
- chaque condition est associée à un paramètre et le paramètre concerne une durée maximale de connexion du terminal au réseau ou une durée maximale de connexion du terminal au réseau après l'envoi du précédent message.
- au moins l'un des paramètres concerne une quantité maximale de données qui peut être transmise lors d'une même connexion ou un nombre maximal de messages qui peuvent être transmis lors d'une même connexion.
- le procédé comprend les étapes suivantes préalables aux étapes de détermination et d'autorisation réalisées dans le terminal: recevoir au terminal un message de téléchargement comprenant une application logicielle (SIMA) exécutable sur le terminal et configurée pour réaliser au moins l'étape d'autorisation de sorte à gérer la connexion du terminal au réseau.
- le message de téléchargement comprenant l'application logicielle (SIMA) est envoyé par un module de gestion de la connectivité du terminal disposé au sein d'un réseau de communication cellulaire et distant du terminal.
- le procédé comprend les étapes suivantes effectuées dans le terminal: recevoir d'un module de gestion distant du terminal un message inhibant les étapes de détermination et d'autorisation réalisées dans le terminal.

L'application logicielle comprend une applet hébergée sur une carte à microcircuit associée audit terminal.

L'application logicielle comprend encore un moyen d'interception apte à intercepter des messages destinés à être envoyés depuis le terminal, afin de déterminer si une connexion est nécessaire, ou non.

L'application logicielle comprend encore un moyen de connexion apte à réaliser une connexion du terminal au réseau de communication cellulaire, si au moins une donnée est à transmettre et si des conditions de configuration sont réunies.

L'application logicielle comprend encore un moyen de déconnexion apte à réaliser une déconnexion du terminal au réseau de communication cellulaire si aucune donnée n'est à transmettre et/ou si des conditions de configuration ne sont pas réunies.

De manière facultative, le procédé selon l'invention comprend en outre au moins l'une quelconque des étapes et caractéristiques optionnelles indiquées ci-dessous.
- Le procédé comprend les étapes suivantes réalisées par un module de gestion de la connectivité du terminal au sein d'un réseau de communication cellulaire, le module de gestion étant distant du terminal : envoyer à un module de connexion en charge de la connexion radio du terminal au réseau de communication cellulaire, un message de signalisation commandant une déconnexion du terminal.
- l'étape d'autorisation réalisée dans le terminal est effectuée par une application logicielle (SIMA) qui s'exécute dans le terminal. Préalablement à l'envoi par le module de gestion d'un message de signalisation commandant une déconnexion du terminal, le module de gestion envoie au terminal un signal de désactivation de l'application logicielle (SIMA).
- le module de gestion identifie si une application logicielle (SIMA) qui s'exécute dans le terminal et qui réalise au moins l'étape d'autorisation est active sur le terminal. Le module de gestion n'envoie pas de message de signalisation commandant une déconnexion du terminal si l'application logicielle (SIMA) est active sur le terminal.
- le module de gestion détermine si l'envoi du message de signalisation commandant une déconnexion du terminal provoque effectivement une déconnexion du terminal. Si l'envoi du message de signalisation commandant une déconnexion du terminal ne provoque pas une déconnexion du terminal, alors le module de gestion envoie un message d'activation d'une application logicielle (SIMA) qui s'exécute dans le terminal et qui réalise au moins l'étape d'autorisation. En réponse au message d'activation, l'application logicielle (SIMA) s'active et réalise au moins l'étape d'autorisation de sorte à gérer la connexion du terminal au réseau. Ainsi, l'invention permet de forcer la déconnexion du terminal si ce dernier ne fonctionne pas correctement.

Selon un autre aspect, la présente invention prévoit un module de gestion de la connectivité d'un terminal du type connectable à un réseau de communication cellulaire, au sein d'un réseau de communication cellulaire selon la revendication 9. Le module de gestion comprend une telle application logicielle et un moyen de téléchargement apte à télécharger ladite application logicielle vers ledit terminal.

Le module de gestion est distant et distinct du terminal.

Le module de gestion comprend encore une base de données, indexée par identificateur d'abonnement, stockant ladite application logicielle.

Ledit moyen de téléchargement est apte à télécharger ladite application logicielle dans la carte à microcircuit dudit terminal lors d'une première connexion du terminal au réseau de communication cellulaire.

Ledit moyen de téléchargement comprend encore un moyen d'envoi configuré pour envoyer un message utilisant le protocole service de message court (message SMS) ou le protocole données de service supplémentaires peu structurées (message USSD) ou bien encore le protocole d'envoi de données habituellement désigné par GPRS, acronyme de General Packet Radio Service signifiant service général de radiocommunication par paquets, afin de télécharger ladite application logicielle (SIMA) au moyen d'un message SMS ou d'un paquet de données envoyé audit terminal via le réseau de communication cellulaire.

Le module de gestion comprend encore un moyen d'émission apte à envoyer à un module de connexion en charge de la connexion radio d'un terminal au réseau de communication cellulaire, un message de signalisation commandant une déconnexion d'un terminal.

Ledit moyen d'émission est conçu de manière à ne pas envoyer un message de signalisation commandant une déconnexion d'un terminal si une application logicielle est active sur ledit terminal.

Le module de gestion est compris dans un module MLR en charge de la gestion des terminaux machines. Le module MLR comprend, en plus du module de gestion, un module registre de localisation (HLR) et un module registre d'identité d'équipement (EIR).

Selon un autre example, il y a également un produit programme d'ordinateur (SIMA), également désigné application logicielle (SIMA), comprenant des instructions, qui lorsqu'elles sont exécutées par au moins un processeur, effectuent les étapes d'une méthode selon l'une quelconque des caractéristiques précédentes.

De manière préférée mais non limitative, le produit programme d'ordinateur (SIMA) est sauvegardé dans une mémoire du terminal ou sur une carte à microcircuit configurée pour être insérée dans le terminal.

Un autre example example concerne une carte à microcircuit comprenant une mémoire dans laquelle est stockée un programme d'ordinateur (SIMA), également désigné application logicielle (SIMA), selon l'une quelconque caractéristiques précédentes.

Selon un autre example, il y a également un terminal comprenant des moyens de transmission d'une information ainsi qu'un programme d'ordinateur (SIMA), également désigné application logicielle (SIMA), selon l'une quelconque des caractéristiques précédentes.

Selon un autre example, il y a également un module de gestion de la connectivité d'au moins un terminal du type connectable à un réseau de communication cellulaire, au sein d'un réseau de communication cellulaire, caractérisé en ce qu'il comprend un produit programme d'ordinateur (SIMA), également désigné application logicielle (SIMA), comprenant des instructions, qui lorsqu'elles sont exécutées par au moins un processeur, effectuent au moins l'une quelconque des étapes réalisées dans le terminal et mentionnées ci-dessus, et un moyen de téléchargement configuré pour télécharger ledit produit programme d'ordinateur (SIMA) vers ledit terminal.

De maniere facultative, le module de gestion de la connectivité du terminal selon l'invention comprend en outre au moins l'une quelconque caractéristiques optionnelles indiquées ci-dessous.
- le module de gestion comprend encore une base de données sauvegardée dans des moyens de stockage de données, indexée par identificateur d'abonnement (IMSI), la base de données stockant ledit produit programme d'ordinateur (SIMA).
- le moyen de téléchargement est configuré pour télécharger ledit produit programme d'ordinateur (SIMA) dans la carte à microcircuit dudit terminal lors d'une première connexion du terminal au réseau de communication cellulaire;
- le moyen de téléchargement comprend encore un moyen d'envoi configuré pour envoyer un message utilisant le protocole service de message court (message SMS) ou le protocole données de service supplémentaires peu structurées (message USSD), afin de télécharger ledit produit programme d'ordinateur (SIMA) au moyen d'un message SMS ou d'un message USSD envoyé audit terminal via le réseau de communication cellulaire.
- le module de gestion comprend un moyen d'émission configuré pour envoyer à un module de connexion en charge de la connexion radio d'un terminal au réseau de communication cellulaire, un message de signalisation commandant une déconnexion d'un terminal.
- ledit moyen d'émission est conçu de manière à ne pas envoyer un message de signalisation commandant une déconnexion d'un terminal si ledit produit programme d'ordinateur (SIMA) est actif sur ledit terminal.
- le terminal est un terminal machine, et où le module de gestion est compris dans un module (MLR) qui comprend, en plus du module de gestion, un module registre de localisation (HLR) et un module registre d'identité d'équipement (EIR).

Selon un autre aspect, l'invention comprend également un module de gestion de la connectivité d'au moins un terminal du type connectable à un réseau de communication cellulaire, au sein d'un réseau de communication cellulaire, le module de gestion comprenant un moyen d'émission configuré pour envoyer à un module de connexion en charge de la connexion radio d'un terminal au réseau de communication cellulaire, un message de signalisation commandant une déconnexion d'un terminal.

Selon un example, il y a un procédé de gestion de la connectivité d'un terminal connectable à un réseau de communication cellulaire, le procédé comprenant les étapes suivantes :
- prévoir un module de gestion de la connectivité d'au moins un terminal du type connectable à un réseau de communication cellulaire, le module de gestion étant situé au sein d'un réseau de communication cellulaire,
- envoyer depuis le module de gestion et à un module de connexion en charge de la connexion radio d'un terminal au réseau de communication cellulaire, un message de signalisation commandant une déconnexion d'un terminal.

Selon un example, il y a également un système de communication comprenant un réseau de communication cellulaire, au moins un terminal selon la présente invention et au moins un module de gestion selon l'invention.

D'autres caractéristiques, détails et avantages de l'invention ressortiront plus clairement de la description détaillée donnée ci-après à titre indicatif en relation avec des dessins sur lesquels :
- la figure 1 présente un diagramme organique figurant un environnement apte à accueillir l'invention,
- la figure 2 présente un diagramme fonctionnel d'un mode de réalisation de l'invention, lors d'une première connexion,
- la figure 3, présente un diagramme fonctionnel d'un mode de réalisation de l'invention, lors d'une connexion ultérieure.

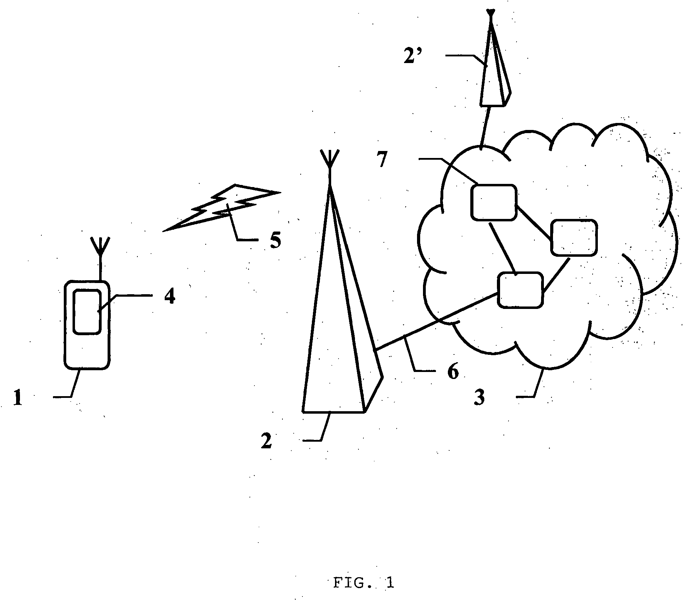

Selon la figure 1, un terminal 1 se connecte via une cellule 2 à un réseau de communication cellulaire 3. Les cellules 2, 2' sont réparties géographiquement, afin d'offrir une zone de couverture. Le terminal 1 peut être indifféremment un terminal téléphone ou un terminal machine. La liaison 5 entre le terminal 1 et la cellule 2 est typiquement une liaison sans fil 5, telle une liaison radiofréquence. Afin de pouvoir se connecter à un réseau de communication cellulaire 3, un terminal 1 doit disposer d'un abonnement contracté auprès d'un fournisseur. Cet abonnement est matérialisé par une carte à microcircuit, également souvent désignée carte à puce ou par son vocable anglais « chip card », ou encore désignée par l'acronyme carte USIM (de l'anglais Universal Subscriber Identification Module, signifiant module universel d'identification d'abonné) ou SIM 4 qui est associée au terminal 1. Pour des raisons de clarté et de concision, dans la suite de la description, la carte à microcircuit sera désignée carte SIM. La carte SIM est typiquement embarquée dans le terminal. Elle peut y être insérée lors de la fabrication du terminal et être inamovible ou bien être amovible.

La présente invention n'est pas limitative d'un type de terminal. Un terminal peut être tout équipement apte à se connecter à un réseau de communication sans fil pour envoyer et de préférence recevoir des messages. Ainsi, dans le cadre de la présente invention, un terminal peut être un capteur muni d'un émetteur. Un tel capteur peut par exemple capter une température, un courant, une pression, un signal lumineux, une valeur numérique ou analogique etc.

La liaison 6 entre une cellule 2 et le reste du réseau de communication 3 est, le plus souvent, une liaison filaire 6. Le reste du réseau de communication 3 comprend de manière classique des noeuds interconnectés, comprenant des modules logiciels 7 en charge des différentes fonctions nécessaires à la gestion et au fonctionnement du réseau de communication cellulaire 3. Ledit réseau de communication cellulaire 3 comprend avantageusement des passerelles vers d'autres réseaux de communication, tel Internet.

De manière connue, la carte SIM 4 ou carte à microcircuit comprend une puce ou microcontrôleur apte à exécuter des applications logicielles, ainsi que de la mémoire. Ladite mémoire est apte à stocker des informations et/ou des applications logicielles. Parmi les informations il peut être cité les paramètres et identifiants attestant de la souscription d'un abonnement, et permettant d'authentifier l'abonnement afin de réaliser une connexion au réseau de communication cellulaire 3.

Parmi les applications logicielles pouvant être stockées sur la carte SIM 4, il peut être cité un système d'exploitation. Il peut encore être cité une machine virtuelle, telle un interpréteur Java, qui permet l'exécution d'applications logicielles développées selon le langage Java. Une application particulière est encore une boite à outil TK d'application pour carte SIM (en anglais SIM application toolkit) qui permet avantageusement de télécharger une application logicielle, sous forme d'une applet, stockée dans la mémoire de la carte SIM 4 et configurée pour être exécutée sur le microcontrôleur de la carte SIM 4. Une applet est une application logicielle configurée pour être ainsi stockée sur une carte SIM 4 pour être ensuite exécutée dans l'environnement de ladite carte SIM 4. Ladite boite à outil TK permet encore de télécharger une telle applet, par exemple au moyen d'un SMS réceptionné par le terminal 1, et de gérer son exécution.

Afin de gérer la connexion/déconnexion d'un terminal 1 avec un réseau 3 de communication cellulaire, selon une caractéristique importante de l'invention, une application logicielle SIMA exécutable sur un terminal 1 est en charge de la gestion de la connectivité dudit terminal 1. Cette application logicielle SIMA gère la connexion et la déconnexion du terminal 1. Cette gestion de la connectivité a typiquement pour objectif de ne réaliser une connexion que lorsque cela est nécessaire et que le terminal 1 a au moins une donnée à envoyer à un autre dispositif via le réseau de communication cellulaire 3 et à réaliser une déconnexion dès que possible après envoi lorsqu'une connexion n'est plus longtemps nécessaire. La gestion de la connectivité suppose ici que l'application logicielle SIMA effectue elle-même la connexion, respectivement la déconnexion, ou encore qu'elle autorise un autre élément à réaliser cette connexion, respectivement cette déconnexion.

Selon une caractéristique avantageuse, l'application logicielle comprend une applet SIMA. Une telle applet SIMA est avantageusement hébergée dans la mémoire d'une carte à microcircuit USIM 4 associée audit terminal 1 et exécutable par le microcontrôleur de ladite carte USIM 4.

Afin de pouvoir efficacement assurer sa fonction de gestionnaire de connectivité du terminal 1, l'application logicielle SIMA doit être à même de savoir si une connexion du terminal 1 au réseau 3 est nécessaire. Pour cela il faut que l'application logicielle SIMA soit informée lorsque le terminal 1 souhaite envoyer au moins une donnée.

Afin d'envoyer au moins une donnée à un autre dispositif via le réseau de communication cellulaire 3, un terminal 1 utilise un moyen de communication offert par le réseau de communication cellulaire 3 et que l'on nomme ici de manière générique un message. Un message est ici initié par le terminal 1. On parle alors de message envoyé depuis le terminal 1 ou en anglais « Mobile Originated » ou MO.

Aussi, afin d'être informé d'un besoin d'envoi, l'application logicielle SIMA comprend un moyen d'interception des messages (également désigné intercepteur de messages) destinés à être envoyés depuis le terminal 1. Ainsi l'application logicielle SIMA est informée qu'un message doit être envoyé et peut en conséquence déterminer si une connexion est nécessaire, ou non.

Les noms des différents éléments, messages, outils employés peuvent différer d'un standard de réseau de communication cellulaire à un autre. Le paragraphe qui suit est illustratif d'un réseau de communication cellulaire GSM. Cependant l'homme du métier saura adapter à des éléments, messages, outils équivalents dans un autre standard de réseau de communication cellulaire et l'invention n'est en aucune façon limitative d'un réseau GSM.

Dans un réseau de communication cellulaire, un terminal 1 envoie au moins une donnée au moyen d'un message utilisant un protocole standard du réseau en question. Dans un réseau GSM un tel message peut ainsi être un message utilisant le protocole « service de message court » habituellement désigné par son acronyme anglais SMS qui signifie "short message service". Un tel un message peut également être un message utilisant le protocole « données de service supplémentaires peu structurées » habituellement désigné par son acronyme anglais USSD qui signifie « Unstructured Supplementary Service Data ».

Bien que dans la suite de la description ce type de message sera désigné par message SMS par souci de clarté et de concision, l'invention s'étend à toutes les variantes utilisant des messages différents et en particulier aux variantes dans lesquelles un message SMS est substitué à un message USSD ou équivalent.

Toujours dans le standard GSM, un moyen d'interception des messages SMS destinés à être envoyés depuis le terminal MO peut avantageusement être réalisée par une activation d'un service de contrôle et d'interception des messages courts système. Ce service est nommé en anglais « MO short message control service ». La mise en place de ce service a pour effet que tout message court système que tente d'envoyer le terminal 1 est au préalable redirigé vers la carte SIM 4 et ainsi plus particulièrement vers l'application logicielle SIMA.

Ainsi, l'application logicielle SIMA est informée de tout message en partance depuis le terminal 1, et peut efficacement décider de réaliser une connexion, de retarder une telle réalisation, de réaliser une déconnexion ou encore de retarder une telle réalisation, en fonction de la présence ou non de données à envoyer et, le cas échéant, de paramètres de configuration aptes à préciser la stratégie de gestion de la connectivité.

Les paramètres de configuration sont typiquement compris dans un profil associé au terminal 1. Ces paramètres de configuration peuvent comprendre, par exemple, et de manière non exhaustive, les paramètres suivants.

Un paramètre peut être un paramètre de « contrôle de connexion ». Ce paramètre est un paramètre logique à deux valeurs. Il détermine si le terminal 1 doit recevoir une application logicielle SIMA de gestion de sa connectivité, ou si au contraire, le terminal 1 doit rester connecté en permanence.

Un autre paramètre est un paramètre « heures ». Ce paramètre comprend au moins une plage horaire, et définit au moins une plage horaire où le terminal 1 est autorisé à se connecter au réseau. De manière alternative ou complémentaire, un paramètre peut encore définir au moins une plage horaire ou le terminal 1 n'est pas autorisé à se connecter au réseau.

Un autre paramètre est un paramètre « jours ». Ce paramètres comprend au moins un jour de la semaine, et définit au moins un jour de la semaine où le terminal 1 est autorisé à se connecter au réseau. Alternativement ou complémentairement, un paramètre peut encore définir au moins un jour de la semaine où le terminal 1 n'est pas autorisé à se connecter au réseau.

Un autre paramètre est un paramètre « nombre d'essais ». Ce paramètre définit un nombre de tentatives autorisées lors d'un échec d'une tentative de connexion.

Un autre paramètre est un paramètre « durée maximale ». Ce paramètre définit une durée maximale pendant laquelle le terminal 1 peut rester connecté en continu. De manière alternative ou complémentaire, ce paramètre définit une durée maximale pendant laquelle le terminal 1 peut rester connecté en continu après l'envoi du dernier message envoyé.

Un autre paramètre est un paramètre «quota». Ce paramètre définit une quantité maximale de données qui peut être transmise lors d'une connexion. De manière alternative ou complémentaire, ce paramètre définit un nombre maximal de messages qui peuvent être transmis lors d'une même connexion.

D'autres paramètres de configuration peuvent encore être ajoutés au profil.

Afin d'autoriser l'établissement, respectivement le maintien, de la connexion du terminal 1 au réseau 3 ou au contraire d'empêcher l'établissement de, respectivement d'interrompre, la connexion, l'application logicielle SIMA vérifie si les conditions requises sont réunies. A cet effet, l'application récupère des conditions ou règles associées au terminal 1. De préférence, ces conditions ou règles sont prédéfinis dans un profil associé au terminal 1. Chaque condition est associée à un paramètre tels que ceux mentionnés précédemment. Ainsi, l'application logicielle ASIM peut récupérer un ensemble de règles ou conditions. Par exemple, elle récupère les règles suivantes:
« connexion possible si : l'heure est comprise entre 20 heure et 6 heure, le jour est samedi ou dimanche, le temps de connexion est inférieur à 60 secondes».

L'application logicielle récupère ensuite des données définissant le contexte de la tentative de connexion ou de maintien de la connexion. Ces données de contexte sont en rapport avec les conditions de configuration requises et permettent par comparaison de déterminer si ces conditions sont vérifiées ou non. Par exemple,
- si le paramètre est une plage horaire, alors la donnée est de préférence l'heure actuelle. Cette heure est de préférence récupérée par l'application logicielle SIMA depuis une horloge du terminal 1.
- si le paramètre est un jour ou un ensemble de jours de la semaine, alors la donnée est de préférence le jour actuel. Ce jour est de préférence récupéré par l'application logicielle SIMA depuis une horloge du terminal 1 qui indique le jour.
- si le paramètre est un nombre d'essais, alors la donnée est de préférence le nombre d'essais déjà réalisés. Cette donnée de contexte est de préférence récupérée par un compteur d'essais.
- si le paramètre est une durée maximale de connexion, alors la donnée est de préférence une durée depuis le début de la connexion. Cette donnée de contexte est par exemple fournie par un compteur de temps se déclenchant au début de chaque connexion.

De préférence, si au moins une des conditions de configuration n'est pas vérifiée, alors la connexion n'est pas autorisée. Dans l'exemple cité précédemment, si l'heure est 21h30, le jour est samedi, et que le temps de connexion est de 45 secondes, alors l'application logicielle maintient la connexion du terminal 1 au réseau 3. Quelques secondes plus tard, lorsque le compteur de temps excède les 60 secondes, alors l'application logicielle interrompt la connexion du terminal 1 au réseau 3.

Il a été décrit comment, une application logicielle SIMA, embarquée sur un terminal 1 peut gérer, localement depuis le terminal 1, la connectivité dudit terminal 1.

Selon une autre caractéristique, l'invention comprend, au sein du réseau de communication cellulaire 3, encore un module de gestion 7, en charge de la gestion de la connectivité d'un terminal 1. Selon une caractéristique avantageuse, ce module de gestion 7 comprend une application logicielle SIMA, telle que décrite précédemment, associée audit terminal 1 et un moyen de téléchargement configuré pour télécharger ladite application logicielle SIMA vers ledit terminal 1.

Ainsi, par exemple, le module de gestion 7 comprend une base de données, stockant une telle application logicielle SIMA, pour au moins un terminal 1, ou un type de terminal, qui peut se connecter au réseau de communication cellulaire 3. Une telle base de données peut avantageusement être indexée par identificateur d'abonnement ou type d'abonnement. De manière connue un abonnement est identifié de manière unique par un identificateur international d'abonnement mobile, en anglais « international mobile subscriber identifier » ou IMSI. Ledit identificateur IMSI est communiqué au réseau 3 par un terminal 1 lors d'une tentative de connexion. Ceci permet au module de gestion 7 d'identifier l'application logicielle SIMA adéquate adaptée au terminal 1.

Le moyen de téléchargement du module de gestion 7 est configuré pour télécharger ladite application logicielle SIMA dans la carte USIM dudit terminal 1. Ceci est avantageusement réalisé lors d'une première connexion du terminal 1 audit réseau de communication cellulaire 3. Le module de gestion 7 conserve, par exemple dans la base de données un indicateur booléen indiquant si un terminal 1 s'est ou non déjà connecté au réseau de communication cellulaire 3. Deux procédures différentes, qui vont être détaillées plus loin, peuvent ainsi être déroulées selon qu'il s'agit ou non d'une première connexion.

Le téléchargement de l'application logicielle SIMA est avantageusement réalisé sans fil, par transmission radiofréquence. Une telle transmission est nommée sur les ondes, en anglais « over the air » ou OTA. Selon un mode de réalisation avantageux en ce qu'il utilise des services existants et répandus, le module de gestion 7 envoie au moins un message SMS contenant l'application logicielle SIMA, au terminal 1. Aussi le moyen de téléchargement comprend un moyen d'envoi d'un message SMS à cet effet. Il peut ainsi télécharger ladite application logicielle SIMA via le réseau de communication cellulaire 3.

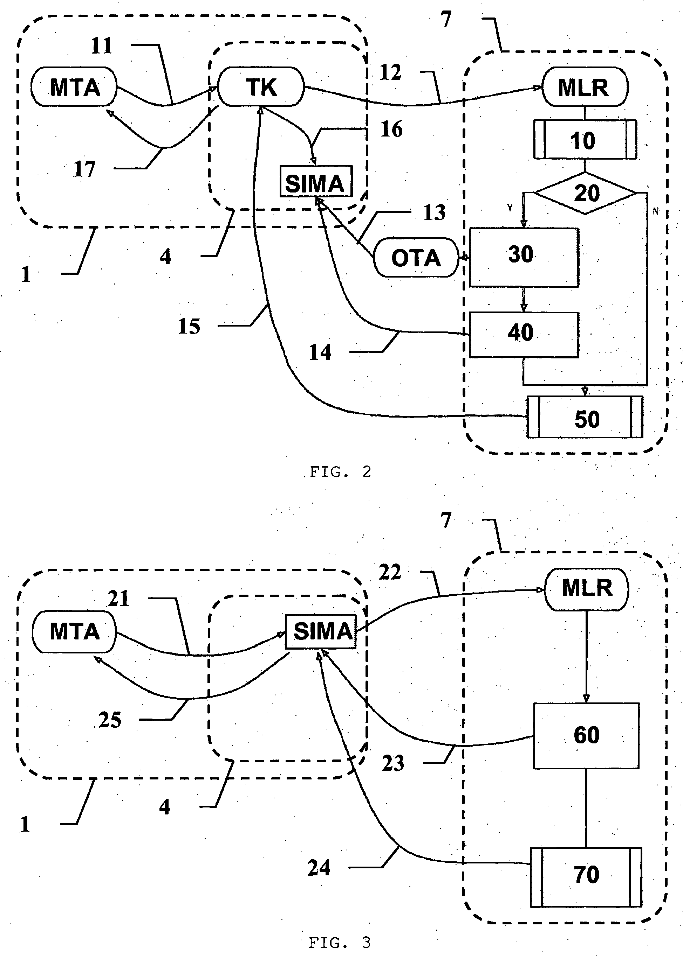

Ce mode de réalisation, que l'on nome « application logicielle », basé sur une application logicielle SIMA embarquée sur le terminal 1 et préalablement téléchargée depuis un module de gestion 7 appartenant au réseau de communication cellulaire 3, lors de la première connexion dudit terminal 1, va maintenant être décrit plus en détail selon un mode de réalisation particulier, en référence aux figures 2 et 3.

La figure 2 illustre le déroulement des opérations lors d'une première connexion du terminal 1 au réseau de communication cellulaire 3. La figure 3 illustre le déroulement des opérations lors d'une connexion ultérieure.

La figure 2 illustre d'une part un terminal 1 comprenant une carte USIM 4, et d'autre part un module de gestion 7 appartenant au réseau de communication cellulaire 3. Le terminal 1 exécute une application logicielle MTA (de l'anglais Mobile Terminal Application) qui gère les envois de données vers le réseau 3. Cette application MTA souhaite se connecter pour envoyer au moins une donnée au réseau 3. Pour cela elle envoie une requête de connexion 11, en anglais « attach request ». La carte USIM 4 exécute une autre application logicielle propre, qui comprend au moins une boite à outil TK, de l'anglais « toolkit ». Cette application, du fait de la mise en place du service de contrôle et d'interception des messages, intercepte cette requête de connexion 11. Cette requête de connexion est cependant retransmise sous forme d'une requête de connexion 12 similaire et adressée au réseau 3. Cette requête de connexion 12 est traitée par le module de gestion 7, ici un module MLR. Ledit traitement comprend une première étape 10, durant laquelle le module 7 consulte une base de données pour obtenir un profil de configuration associé au terminal 1. Plus exactement le profil de configuration est associé à un abonnement associé au terminal 1 et ledit profil de configuration est indexé dans la base de données au moyen de son identificateur IMSI.

Au cours d'une étape 20 suivante, le module de gestion 7 vérifie, en fonction du paramètre « contrôle de connexion » contenu dans le profil, s'il y a lieu de gérer la connectivité du terminal 1 au moyen d'une application logicielle SIMA. Si le résultat est négatif, il est directement procédé à l'étape 50. Ce cas peut, par exemple, correspondre à un terminal 1 dont la connectivité doit être gérée selon un mode de réalisation « signalisation ». Ce mode de gestion de connectivité sera détaillé par la suite.

Si le résultat est positif, la connectivité du terminal 1 doit être gérée au moyen d'une application logicielle SIMA. Au cours d'une étape 30, une applet SIMA, récupérée depuis la base de données, est téléchargée 13 via un module de téléchargement OTA, à destination de la carte USIM 4 du terminal 1. Ceci est avantageusement réalisé au moyen d'un message court système SMS.

Au cours d'une étape 40 suivante optionnelle, le module de gestion 7 transmet 14 à ladite applet SIMA, un profil de configuration contenant les paramètres définissant quand et comment une connexion/déconnexion doit être réalisée (« heures », « jours », etc.). Ceci est avantageusement réalisé au moyen d'un message court système SMS.

Au cours d'une étape suivante 50, réalisée que le terminal 1 ait sa connectivité gérée ou non via une applet SIMA, il est procédé aux opérations d'authentification classiques afin d'autoriser ou non le terminal 1 à se connecter. Cette étape 50 est connue. Elle vise à vérifier des conditions de sécurité, mais contrairement à l'applet SIMA exécutée au niveau du terminal, elle ne vise pas gérer la connexion en fonction de la vérification de paramètres de profils. Durant cette étape 50, le module de gestion 7 envoie 15 à l'application TK s'exécutant sur la carte USIM 4 les éléments à vérifier.

En fonction du résultat de l'authentification, l'application TK active 16 le service de contrôle et d'interception au profit de l'applet SIMA, afin que tout message tentant de sortir du terminal 1 soit redirigé vers ladite applet SIMA.

Ensuite l'application TK renvoie 17, à l'application terminale MTA, une validation/invalidation de la demande de connexion, au moyen d'un message d'acceptation de connexion, en anglais « attach accept » ou de refus de connexion, en anglais « attach refused ».

Au cours de sa première connexion au réseau de communication cellulaire 3, le terminal 1 est ainsi identifié comme tel, et se voit, le cas échéant, affecter et télécharger une applet SIMA en charge de gérer sa connectivité.

En référence maintenant à la figure 3, va maintenant être décrite une connexion ultérieure. Le déroulement est ici initié par l'application MTA s'exécutant sur le terminal 1 qui, parce qu'elle dispose d'au moins une donnée qu'elle souhaite transmettre au réseau de communication cellulaire 3, émet un premier message 21. Ce message est une demande d'envoi d'un message SMS. Du fait de la mise en place du service de contrôle et d'interception, ce message 21 est intercepté par l'applet SIMA, installée lors de la première connexion.

Cette applet SIMA, si les paramètres de configuration contenus dans son profil sont vérifiés, autorise une connexion et envoi un message 22 de requête de connexion, en anglais « attach request » au module de gestion 7.

Ce module de gestion 7 réalise alors deux étapes. Au cours d'une étape 60, il vérifie si une mise à jour de l'applet SIMA ou de son profil de configuration est nécessaire. Une telle possibilité de mise à jour, permet de répercuter une nouvelle politique de configuration en la transmettant aux applets SIMA en charge de la gestion de la connectivité. Elle permet de changer le profil de configuration, ou encore l'applet SIMA elle même. Si une telle mise à jour est souhaitée, elle est alors réalisée par un message 23 envoyé à l'applet SIMA. Si aucune mise à jour n'est nécessaire, le message 23 n'est pas envoyé.

Au cours d'une étape 70, similaire à l'étape 50 de la figure 2, il est procédé aux vérifications d'authentification du terminal 1. En fonction du résultat de cette authentification, il est renvoyé à l'applet SIMA un message 24 d'autorisation de connexion, en anglais « attach accepted » ou de refus de connexion, en anglais « attach refused ».

L'applet SIMA retransmet ce message d'acceptation ou de refus de connexion à l'application MTA via un message 25.

Selon un mode de réalisation alternatif, que l'on nomme « signalisation », il est possible de gérer la connectivité d'un terminal 1 connectable au réseau de communication cellulaire 3 depuis le réseau de communication cellulaire 3 lui-même. Dans ce cas un module est en charge, de déconnecter un terminal 1 lorsque ce dernier est connecté au réseau mais typiquement est inactif. Pour ce faire, ledit module envoie un message de signalisation, en anglais « signalling message », commandant une déconnexion, au(x) module(s) du réseau en charge de gérer la connexion avec le terminal. Ainsi, par exemple dans un réseau GSM, le module en charge de gérer la liaison radio avec un terminal 1, le module contrôleur de station de base, en anglais « base station controller » ou BSC reçoit une telle commande et déconnecte alors le terminal 1.

Dans certains cas, il peut être intéressant que le module de gestion distant du terminal, typiquement un HLR ou le MLR ordonne la déconnexion. Ce détachement est typiquement fonction des droits définis dans le profile du terminal. Cela permet d'optimiser la charge réseau car les terminaux sont connectés/déconnectés au plus tôt en fonction de données de l'opérateur ce qui peut s'avérer plus efficace qu'une solution dans laquelle le terminal est géré par des éléments extérieurs au réseau de l'opérateur tel que le terminal lui-même et une application qu'il embarque. Cette alternative permet à l'opérateur de contrôler la désactivation.

En outre, cette solution ne nécessite pas que toutes les applications et tous les terminaux implémentent une solution basée sur une déconnexion gérée par le terminal, permettant ainsi dé réduire les coûts.

Ce mode de réalisation est particulièrement, en coopération avec le mode de réalisation « application logicielle ».

Selon le mode de réalisation « signalisation », un module de gestion « signalisation », qui peut, ou non, être confondu avec le module de gestion 7 précédemment décrit en référence avec le mode de réalisation « application logicielle », comprend un moyen d'émission de message de signalisation afin de commander une déconnexion d'un terminal 1. Un tel message de signalisation est ainsi envoyé à un module de connexion, tel le module BSC, en charge de la connexion radio d'un terminal 1 au réseau de communication cellulaire 3. Dans un réseau au standard GSM, un tel message de signalisation peut être, par exemple, un message « MAP-cancel-location » dont le type de terminaison ("cancellation-type" en Anglais) sera positionné à "abonnement retiré"("subscription withdrawn")

Selon un mode de réalisation avantageux qui combine les deux modes de réalisation précédents « application logicielle » et « signalisation », le module de gestion 7 arbitre entre ces deux modes possibles. Le choix d'un mode de réalisation de gestion de connexion/déconnexion est avantageusement réalisé par le module de gestion 7 par exemple en fonction d'un paramètre de configuration déterminé pour chaque terminal, par exemple par un profil de configuration compris dans la base de données, avantageusement indexé dans ladite base de données au moyen de l'identificateur IMSI dudit terminal 1.

Il est encore possible, pour le module de gestion 7, de passer d'un mode de réalisation à l'autre.

Ainsi, par exemple, si la connectivité d'un terminal 1 est initialement gérée selon un mode « signalisation », et que le module de gestion 7 se rend compte, par exemple au moyen d'un comptage du nombre de connexions dans une période de temps, que l'envoi d'un message de signalisation ne suffit pas à déconnecter le terminal 1, le module de gestion peut décider, avantageusement si la configuration du terminal 1 l'autorise, de changer de mode de réalisation et de passer en mode « application logicielle ». Pour cela, le module de gestion 7 télécharge alors une application logicielle SIMA qui prend alors le relais et gère la connectivité du terminal 1 depuis le terminal 1 lui-même.

Dans ce cas le module de gestion 7, après le téléchargement de l'application logicielle SIMA, se garde avantageusement d'envoyer plus longtemps des messages de signalisation commandant une déconnexion du terminal 1.

A contrario, si la connectivité d'un terminal 1 est initialement gérée selon un mode « application logicielle » le module de gestion 7 peut décider de stopper le fonctionnement de ladite application logicielle SIMA. Pour cela le module de gestion 7 fait en sorte que l'application logicielle SIMA ne soit plus opérationnelle. Pour cela le module de gestion 7 provoque un « déchargement » de ladite application logicielle SIMA ou transmet au terminal 1 une commande inhibant l'application logicielle SIMA. A tout le moins, il est toujours possible au module de gestion 7, de mèttre à jour/télécharger une nouvelle application logicielle SIMA, vide ou inopérante, qui remplace l'ancienne. Après avoir rendu inopérante ladite application logicielle SIMA, le module de gestion 7 repasse en mode « signalisation » et pilote directement une déconnexion du terminal 1 en envoyant un message de signalisation de déconnexion.

Ainsi dans tous les cas, le module de gestion 7 reste maître du mode de gestion de la connectivité d'un terminal 1.

A un instant donné cependant, les deux modes de réalisation « application logicielle » et « signalisation » sont avantageusement exclusifs. Ainsi le module de gestion s'interdit d'envoyer un message de signalisation de déconnexion à un terminal 1 dont la connectivité est gérée par une application logicielle SIMA téléchargée et fonctionnellement active. Si une application logicielle SIMA est téléchargée et active sur un terminal 1, cette application logicielle SIMA est en charge de gérer la connectivité du terminal 1. Aussi le module de gestion 7 rend avantageusement une application logicielle SIMA inactive ou inexistante sur un terminal 1 avant d'envoyer un quelconque message de signalisation de déconnexion.

Ainsi, et comme indique précédemment, l'étape de déconnection du terminal 1 par rapport au réseau peut s'effectuer de plusieurs façons. Notamment, la déconnexion du terminal peut comprendre :
- la réception par le terminal 1 d'un message de signalisation commandant une déconnexion du terminal 1 et envoyé par le module de gestion 7 distant du terminal 1, la déconnexion étant alors effectuée par le terminal 1 ; ou
- l'envoi d'un message de signalisation commandant une déconnexion du terminal 1, le message étant envoyé par le module de gestion 7 à un module de connexion en charge de la connexion du terminal 1 au réseau 3, la déconnexion étant alors effectuée par ledit module de connexion..

L'invention permet ainsi de garantir la déconnexion du terminal, même si ce dernier ne fonctionne pas correctement. Cela arrive fréquemment lorsque le terminal, typiquement un capteur, a été obtenu à un bas coût.

Dans un environnement inter machine, comprenant au moins un terminal machine 1, il est intéressant de gérer ledit au moins un terminal machine au moyen d'un module MLR particulier. Une description précise d'un tel module MLR est, par exemple, donnée dans la demande de brevet européen N° 11306123.8 déposée le 9 Septembre 2011 par le même demandeur.

Un tel module MLR se substitue, pour les terminaux machines 1 et leur gestion à certains modules du réseau de communication cellulaire 3. Parmi ces modules, se trouvent le module registre de localisation HLR et le module registre d'identité d'équipement EIR. Le module MLR se substitue ainsi à ces modules EIR, HLR, qu'il remplace pour la gestion des terminaux machines. Ainsi pour les terminaux machines, toute communication à destination d'un module HLR, EIR, est redirigée vers le module MLR qui les remplace. Le module MLR remplit, pour les terminaux machines, les mêmes fonctions que ces modules et répond en conséquence aux requêtes des demandeurs. Ceci permet avantageusement de centraliser tous les traitements afférents aux terminaux machines au sein d'un même module MLR.

Ainsi, dans un tel environnement comprenant un module MLR, ce module MLR comprend avantageusement aussi le module de gestion 7 de la connectivité précédemment décrit, tant pour le mode de réalisation « application logicielle » que pour le mode de réalisation « signalisation ».

## Revendications

1. Procédé de gestion de la connectivité d'un terminal (1) connectable à un réseau (3) de communication cellulaire comprenant les étapes suivantes réalisées dans le terminal (1):
- déterminer si des conditions de configurations requises pour autoriser une connexion du terminal au réseau (3) sont réunies,
- autoriser la connexion du terminal au réseau (3) uniquement si les conditions de configurations requises sont réunies, autrement empêcher la connexion du terminal au réseau (3),
et **caractérisé en ce qu'**il comprend une étape de déconnexion du terminal (1) par rapport au réseau (3) de communication cellulaire en réponse à :
- l'envoi d'un message de signalisation commandant une déconnexion du terminal (1), le message étant envoyé par un module de gestion (7) de la connectivité du terminal (1) au sein d'un réseau (3) de communication cellulaire, le module de gestion (7) étant distant du terminal (1), à un module de connexion en charge de la connexion du terminal (1) au réseau (3) de communication cellulaire, la déconnexion étant effectuée par ledit module de connexion et
dans lequel le module de gestion (7) détermine si l'envoi du message de signalisation commandant une déconnexion du terminal (1) provoque effectivement une déconnexion du terminal (1) ; et si l'envoi du message de signalisation commandant une déconnexion du terminal (1) ne provoque pas une déconnexion du terminal (1), alors le module de gestion (7) envoie un message d'activation d'une application logicielle (SIMA) qui s'exécute dans le terminal (1) et qui réalise au moins l'étape d'autorisation ; en réponse au message d'activation, l'application logicielle (SIMA) s'active et réalise au moins l'étape d'autorisation de sorte à gérer la connexion du terminal (1) au réseau (3).

2. Procédé selon la revendication précédente dans lequel ledit module de connexion en charge de la connexion radio du terminal (1) au réseau (3) de communication cellulaire est un module contrôleur de station de base, BSC.

3. Procédé selon l'une quelconque des revendications précédentes dans lequel le module de gestion (7) identifie si l'application logicielle (SIMA) qui s'exécute dans le terminal (1) et qui réalise au moins l'étape d'autorisation est active sur le terminal, et en fonction d'un paramètre de configuration déterminé pour chaque terminal par un profil de configuration compris dans une base de donnée du module de gestion (7) :
- le module de gestion (7) n'envoie pas de message de signalisation commandant une déconnexion du terminal (1) si l'application logicielle (SIMA) est active sur le terminal (1) ;
ou
- le module de module de gestion (7) provoque un « déchargement » de ladite application logicielle (SIMA) ou transmet au terminal 1 une commande inhibant l'application logicielle (SIMA).

4. Procédé selon l'une quelconque des revendications précédentes dans lequel, si le terminal est déjà connecté au réseau (3) avant les étapes de détermination et d'autorisation :
- l'étape de détermination est effectuée à l'issue de l'envoi de messages ou au bout d'une durée prédéterminée suite à l'envoi de messages, ou à l'issue d'une durée prédéterminée de connexion,
- l'étape d'autorisation provoque : le maintien de la connexion du terminal au réseau (3) si les conditions de configurations requises pour établir une connexion du terminal au réseau (3) sont réunies ou la déconnexion du terminal au réseau (3) si les conditions de configurations requises pour établir une connexion du terminal au réseau (3) ne sont pas réunies.

5. Procédé selon l'une quelconque des revendications précédentes, dans lequel ladite application logicielle (SIMA) est stockée dans une mémoire d'une carte SIM (4) du terminal et dans lequel ladite application logicielle (SIMA) est configurée pour être exécutée sur un microcontrôleur de la carte SIM (4).

6. Procédé selon l'une quelconque des revendications précédentes, dans lequel l'étape consistant à déterminer si des conditions de configurations requises pour établir une connexion du terminal au réseau (3) sont réunies comprend une étape de comparaison d'au moins une condition de profil avec au moins une donnée de contexte disponible au niveau du terminal (1) et qui caractérise le contexte de connexion du terminal au réseau (3) et dans lequel chaque condition est associée à un paramètre, le paramètre étant pris parmi : une plage horaire définissant au moins une plage horaire où le terminal (1) est autorisé à se connecter au réseau (3), une plage horaire définissant au moins une plage horaire où le terminal (1) n'est pas autorisé à se connecter au réseau (3), des jours définissant au moins un jour de la semaine où le terminal (1) est autorisé à se connecter au réseau (3), des jours définissant au moins un jour de la semaine où le terminal (1) n'est pas autorisé à se connecter au réseau (3), un nombre d'essais définissant un nombre de tentatives autorisées lors d'un échec d'une tentative de connexion ou dans lequel le paramètre concerne une durée maximale de connexion du terminal (1) au réseau (3) ou une durée maximale de connexion du terminal (1) au réseau (3) après l'envoi du précédent message ou dans lequel au moins l'un des paramètres concerne une quantité maximale de données qui peut être transmise lors d'une même connexion ou un nombre maximal de messages qui peuvent être transmis lors d'une même connexion.

7. Procédé selon l'une quelconque des revendications précédentes comprenant les étapes suivantes préalables aux étapes de détermination et d'autorisation réalisées dans le terminal (1): recevoir au terminal (1) un message de téléchargement comprenant ladite application logicielle (SIMA) exécutable sur le terminal (1) et configurée pour réaliser au moins l'étape d'autorisation de sorte à gérer la connexion du terminal (1) au réseau (3), dans lequel le message dé téléchargement comprenant l'application logicielle (SIMA) est envoyé par ledit module de gestion (7) de la connectivité du terminal (1) disposé au sein d'un réseau (3) de communication cellulaire et étant distant du terminal (1).

8. Procédé selon l'une quelconque des revendications précédentes comprenant les étapes suivantes sont effectuées dans le terminal (1): recevoir d'un module de gestion (7) distant du terminal (1) un message inhibant les étapes de détermination et d'autorisation réalisées dans le terminal (1).

9. Module de gestion (7) de la connectivité d'au moins un terminal (1) du type connectable à un réseau (3) de communication cellulaire, au sein d'un réseau (3) de communication cellulaire, le module de gestion (7) étant distant du terminal (1), **caractérisé en ce qu'**il comprend un moyen d'émission configuré pour envoyer à un module de connexion en charge de la connexion radio d'un terminal (1) au réseau (3) de communication cellulaire, un message de signalisation commandant une déconnexion du terminal (1),
et dans lequel le module de gestion (7) est configuré pour déterminer si l'envoi du message de signalisation commandant une déconnexion du terminal (1) provoque effectivement une déconnexion du terminal (1); et si l'envoi du message de signalisation commandant une déconnexion du terminal (1) ne provoque pas une déconnexion du terminal (1), alors le module de gestion (7) est configuré pour envoyer un message d'activation d'une application logicielle (SIMA) qui s'exécute dans le terminal (1) et qui réalise au moins une étape d'autorisation de la connexion du terminal (1) au réseau (3).

10. Module de gestion selon la revendication précédente, comprenant un moyen de téléchargement configuré pour télécharger ladite application logicielle (SIMA) vers une carte SIM (4) du terminal (1) et où le moyen de téléchargement est configuré pour télécharger ladite application logicielle (SIMA) dans la carte à microcircuit (4) dudit terminal (1) lors d'une première connexion du terminal (1) au réseau (3) de communication cellulaire.

11. Module de gestion selon la revendication précédente comprenant encore une base de données sauvegardée dans des moyens de stockage de données, indexée par identificateur d'abonnement, IMSI, la base de données stockant ladite application logicielle (SIMA).

12. Module de gestion selon l'une quelconque des deux revendications précédentes, où le moyen de téléchargement comprend encore un moyen d'envoi configuré pour envoyer un message utilisant le protocole service de message court, message SMS, ou le protocole données de service supplémentaires peu structurées (message USSD) ou bien le protocole service général de radiocommunication par paquets, GPRS, afin de télécharger ladite application logicielle (SIMA) au moyen d'un message SMS ou d'un message USSD envoyé audit terminal (1) via le réseau (3) de communication cellulaire.

13. Module de gestion selon l'une quelconque des quatre revendications précédentes où ledit moyen d'émission est conçu de manière à ne pas envoyer un message de signalisation commandant une déconnexion d'un terminal (1) si ladite application logicielle (SIMA) est active sur ledit terminal (1).

14. Module de gestion selon l'une quelconque des cinq revendications précédentes, où le terminal (1) est un terminal machine (1), et où le module de gestion (7) est compris dans un module (MLR) qui comprend, en plus du module de gestion (7), un module registre de localisation, HLR et un module registre d'identité d'équipement, EIR.

15. Module de gestion selon l'une quelconque des six revendications précédentes, où le message de signalisation commandant une déconnexion du terminal (1) est un message de « MAP-cancel-location » présentant un type de terminaison positionné à "abonnement retiré, "subscription withdrawn".

## Patentansprüche

1. Verfahren zum Verwalten der Konnektivität eines Endgeräts (1), das mit einem Mobilfunknetzwerk (3) verbindbar ist, das die folgenden Schritte umfasst, die in dem Endgerät (1) umgesetzt werden:
- Bestimmen, ob Konfigurationsbedingungen, die erforderlich sind, um eine Verbindung des Endgeräts mit dem Netzwerk (3) zu autorisieren, erfüllt sind,
- nur dann Autorisieren der Verbindung des Endgeräts mit dem Netzwerk (3), wenn die erforderlichen Konfigurationsbedingungen erfüllt sind, andernfalls Verhindern der Verbindung des Endgeräts mit dem Netzwerk (3),
und **dadurch gekennzeichnet, dass** es einen Schritt zum Trennen des Endgeräts (1) von dem Mobilfunknetzwerk (3) umfasst, als Antwort auf:
- das Senden einer Signalisierungsmeldung, die eine Trennung des Endgeräts (1) verlangt, wobei die Meldung von einem Modul (7) zum Verwalten der Konnektivität des Endgeräts (1) in einem Mobilfunknetzwerk (3) gesendet wird, wobei das Verwaltungsmodul (7) von dem Endgerät (1) entfernt ist, an ein Verbindungsmodul, das für die Verbindung des Endgeräts (1) mit dem Mobilfunknetzwerk (3) verantwortlich ist, wobei das Trennen von dem Verbindungsmodul durchgeführt wird, und
wobei das Verwaltungsmodul (7) bestimmt, ob das Senden der Signalisierungsmeldung, die eine Trennung des Endgeräts (1) verlangt, tatsächlich eine Trennung des Endgeräts (1) bewirkt; und wenn das Senden der Signalisierungsmeldung, die eine Trennung des Endgeräts (1) verlangt, keine Trennung des Endgeräts (1) bewirkt, dann sendet das Verwaltungsmodul (7) eine Aktivierungsmeldung einer Software-Anwendung (SIMA), die in dem Endgerät (1) ausgeführt wird und die mindestens den Schritt zur Autorisierung umsetzt; als Antwort auf die Aktivierungsmeldung aktiviert sich die Software-Anwendung (SIMA) und setzt mindestens den Schritt zur Autorisierung um, um die Verbindung des Endgeräts (1) mit dem Netzwerk (3) zu verwalten.

2. Verfahren nach dem vorhergehenden Anspruch, wobei das Verbindungsmodul, das für die Radioverbindung des Endgeräts (1) mit den Mobilfunknetz (3) verantwortlich ist, ein Basisstation-Kontrollmodul BSC ist.

3. Verfahren nach einem der vorhergehenden Ansprüche, wobei das Verwaltungsmodul (7) identifiziert, ob die Software-Anwendung (SIMA), die in dem Endgerät (1) ausführt wird und die mindestens den Schritt zur Autorisierung umsetzt, in dem Endgerät aktiv ist, und, in Abhängigkeit von einem Konfigurationsparameter, der für jedes Endgerät von einem Konfigurationsprofil bestimmt wird, das in einer Datenbank des Verwaltungsmoduls (7) enthalten ist:
- das Verwaltungsmodul (7) keine Signalisierungsmeldung sendet, die eine Trennung des Endgeräts (1) verlangt, wenn die Software-Anwendung (SIMA) in dem Endgerät (1) aktiv ist; Oder
- das Verwaltungsmodul-Modul (7) ein "Nicht-Laden" der Software-Anwendung (SIMA) bewirkt oder an das Endgerät 1 einen Befehl überträgt, der die Software-Anwendung (SIMA) hemmt.

4. Verfahren nach einem der vorhergehenden Ansprüche, wobei, wenn das Endgerät bereits vor den Schritten zur Bestimmung und Autorisierung mit dem Netzwerk (3) verbunden ist:
- der Schritt zum Bestimmen nach dem Senden von Meldungen oder am Ende einer vorbestimmten Dauer im Anschluss an das Senden von Meldungen, oder nach einer vorbestimmten Verbindungsdauer durchgeführt wird,
- der Autorisierungsschritt bewirkt: das Aufrechterhalten der Verbindung des Endgeräts mit dem Netzwerk (3), wenn die Konfigurationsbedingungen, die erforderlich sind, um eine Verbindung des Endgeräts mit dem Netzwerk (3) herzustellen, erfüllt sind, oder das Trennen des Endgeräts von dem Netzwerk (3), wenn die Konfigurationsbedingungen, die erforderlich sind, um eine Verbindung des Endgeräts mit dem Netzwerk (3) herzustellen, nicht erfüllt sind.

5. Verfahren nach einem der vorhergehenden Ansprüche, wobei die Software-Anwendung (SIMA) in einem Speicher einer SIM-Karte (4) des Endgeräts gespeichert ist und wobei die Software-Anwendung (SIMA) konfiguriert ist, um auf einem Mikrocontroller der SIM-Karte (4) ausgeführt zu werden.

6. Verfahren nach einem der vorhergehenden Ansprüche, wobei der Schritt zum Bestimmen, ob Konfigurationsbedingungen, die erforderlich sind, um eine Verbindung des Endgeräts mit dem Netzwerk (3) herzustellen, erfüllt sind, einen Schritt zum Vergleichen mindestens einer Profilbedingung mit mindestens einem Kontextdatum umfasst, das am Endgerät (1) verfügbar ist, und die den Verbindungskontext des Endgeräts mit dem Netzwerk (3) kennzeichnet, und wobei jede Bedingung mit einem Parameter assoziiert ist, wobei der Parameter ausgewählt ist aus: einer Sendezeit, die mindestens eine Sendezeit definiert, in der das Endgerät (1) autorisiert ist, sich mit dem Netzwerk (3) zu verbinden, einer Sendzeit, die mindestens eine Sendezeit definiert, in der das Endgerät (1) nicht autorisiert ist, sich mit dem Netzwerk (3) zu verbinden, Tagen, die mindestens einen Tag der Woche definieren, an dem das Endgerät (1) autorisiert ist, sich mit dem Netzwerk (3) zu verbinden, Tagen, die mindestens einen Tag der Woche definieren, an dem das Endgerät (1) nicht autorisiert ist, sich mit dem Netzwerk (3) zu verbinden, einer Anzahl von Versuchen, die eine Anzahl von autorisierten Versuchen beim Misslingen eines Verbindungsversuchs definiert, oder wobei der Parameter eine maximale Verbindungsdauer des Endgeräts (1) mit dem Netzwerk (3) oder eine maximale Verbindungsdauer des Endgeräts (1) mit dem Netzwerk (3) nach dem Senden der vorausgehenden Meldung betrifft oder wobei mindestens einer der Parameter eine maximale Datenmenge betrifft, die während ein und derselben Verbindung übertragen werden kann oder eine maximale Anzahl an Meldungen, die während ein und derselben Verbindung übertragen werden können.

7. Verfahren nach einem der vorhergehenden Ansprüche, umfassend die folgenden Schritte, die den Schritten zum Bestimmen und zur Autorisierung vorausgehen, die in dem Endgerät (1) umgesetzt werden: Empfangen am Endgerät (1) einer Meldung zum Herunterladen, umfassend die Software-Anwendung (SIMA), die auf dem Endgerät (1) ausführbar und konfiguriert ist, um mindestens den Schritt zum Autorisieren umzusetzen, um die Verbindung des Endgeräts (1) mit dem Netzwerk (3) zu verwalten, wobei die Meldung zum Herunterladen, umfassend die Software-Anwendung (SIMA), von dem Modul (7) zur Verwaltung der Konnektivität des Endgeräts (1) gesendet wird, das in einem Mobilfunknetzwerk (3) angeordnet und von dem Endgerät (1) entfernt ist.

8. Verfahren nach einem der vorhergehenden Ansprüche, umfassend die folgenden Schritte, die in dem Endgerät (1) durchgeführt werden: Empfangen von einem Verwaltungsmodul (7), das von dem Endgerät (1) entfernt ist, einer Meldung, die die Schritte zum Bestimmen und zum Autorisieren, die in dem Endgerät (1) durchgeführt werden, hemmt.

9. Modul zum Verwalten (7) der Konnektivität mindestens eines Endgeräts (1), das mit einem Mobilfunknetzwerk (3) in einem Mobilfunknetzwerk (3) verbindbar ist, wobei das Verwaltungsmodul (7) vom Endgerät (1) entfernt ist, **dadurch gekennzeichnet, dass** es eine Sendeeinrichtung umfasst, die konfiguriert ist, um an ein Verbindungsmodul, das für die Radioverbindung eines Endgeräts (1) mit dem Mobilfunknetzwerk (3) verantwortlich ist, eine Signalisierungsmeldung zu senden, die eine Trennung des Endgeräts (1) verlangt, und wobei das Verwaltungsmodul (7) konfiguriert ist, um zu bestimmen, ob das Senden der Signalisierungsmeldung, die eine Trennung des Endgeräts (1) verlangt, tatsächlich eine Trennung des Endgeräts (1) bewirkt; und wenn das Senden der Signalisierungsmeldung, die eine Trennung des Endgeräts (1) verlangt, keine Trennung des Endgeräts (1) bewirkt, das Verwaltungsmodul (7) dann konfiguriert ist, um eine Meldung zur Aktivierung einer Software-Anwendung (SIMA) zu senden, die in dem Endgerät (1) ausgeführt wird und die mindestens einen Schritt zur Autorisierung der Verbindung des Endgeräts (1) mit dem Netzwerk (3) umsetzt.

10. Verwaltungsmodul nach dem vorhergehenden Anspruch, umfassend eine Einrichtung zum Herunterladen, die konfiguriert ist, um die Software-Anwendung (SIMA) auf eine SIM-Karte (4) des Endgeräts (1) herunterzuladen und wobei die Einrichtung zum Herunterladen konfiguriert ist, um die Software-Anwendung (SIMA) während einer ersten Verbindung des Endgeräts (1) mit dem Mobilfunknetzwerk (3) in die Mikroschaltungskarte (4) des Endgeräts (1) herunterzuladen.

11. Verwaltungsmodul nach dem vorherigen Anspruch, umfassend außerdem eine Datenbank, die in Einrichtungen zur Datenspeicherung gesichert ist, die mit der internationalen Mobilfunk-Teilnehmerkennung IMSI indexiert ist, wobei die Datenbank die Software-Anwendung (SIMA) speichert.

12. Verwaltungsmodul nach einem der beiden vorhergehenden Ansprüche, wobei die Einrichtung zum Herunterladen außerdem eine Sendeeinrichtung umfasst, die konfiguriert ist, um eine Meldung zu senden, die das Protokoll des Kurznachrichtendiensts SMS-Meldung oder das Protokoll der unstrukturierten Zusatzdienstdaten (USSD-Meldung) oder auch das Protokoll des allgemeinen Paketfunkdiensts GPRS verwendet, um die Software-Anwendung (SIMA) mittels einer SMS-Meldung oder einer USSD-Meldung, die an das Endgerät (1) über das Mobilfunknetzwerk (3) gesendet wird, herunterzuladen.

13. Verwaltungsmodul nach einem der vier vorhergehenden Ansprüche, wobei die Sendeeinrichtung derart konzipiert ist, dass sie keine Signalisierungsmeldung sendet, die eine Trennung eines Endgeräts (1) verlangt, wenn die Software-Anwendung (SIMA) auf dem Endgerät (1) aktiv ist.

14. Verwaltungsmodul nach einem der fünf vorhergehenden Ansprüche, wobei das Endgerät (1) ein Maschinen-Endgerät (1) ist, und wobei das Verwaltungsmodul (7) in einem Modul (MLR) enthalten ist, dass neben dem Verwaltungsmodul (7) ein Modul Heimatortsregister HLR und ein Modul Geräteidentitätsregister EIR umfasst.

15. Verwaltungsmodul nach einem der sechs vorhergehenden Ansprüche, wobei die Signalisierungsmeldung, die eine Trennung des Endgeräts (1) verlangt, eine "MAP-cancel-location"-Meldung ist, die einen Abschlusstyp aufweist, der auf "Abonnement zurückgenommen" "subscription withdrawn" positioniert ist.

## Claims

1. Method for managing the connectivity of a terminal (1) that can be connected to a cellular communication network (3), comprising the following steps carried out in the terminal (1):
- determining whether conditions of configurations required for authorising a connection of the terminal to the network (3) are met,
- authorising the connection of the terminal to the network (3) only if the conditions of configurations required are met, otherwise preventing the connection of the terminal to the network (3),
and **characterised in that** it comprises a step of disconnecting the terminal (1) from the cellular communication network (3) in response to:
- the sending of a signalling message ordering a disconnection of the terminal (1), the message being sent by a module (7) for managing the connectivity of the terminal (1) in the a cellular communication network (3), the management module (7) being remote from the terminal (1), to a connection module responsible for the connection of the terminal (1) to the cellular communication network (3), the disconnection being carried out by said connection module and
wherein the management module (7) determines whether the sending of the signalling message ordering a disconnection of the terminal (1) actually causes a disconnection of the terminal (1); and if the sending of the signalling message ordering a disconnection of the terminal (1) does not cause a disconnection of the terminal (1), then the management module (7) sends a message for activating a software application (SIMA) that is executed in the terminal (1) and carries out at least the authorisation step; in response to the activation message, the software application (SIMA) is activated and carries out at least the authorisation step in such a way as to manage the connection of the terminal (1) to the network (3).

2. Method according to the preceding claim, wherein said connection module responsible for the radio connection of the terminal (1) to the cellular communication network (3) is a BSC base station controller module.

3. Method according to any one of the previous claims, wherein the management module (7) identifies whether the software application (SIMA) that is executed in the terminal (1) and carries out at least the authorisation step is active in the terminal, and according to a configuration parameter determined for each terminal by a configuration profile comprised in a database of the management module (7):
- the management module (7) does not send a signalling message ordering a disconnection of the terminal (1) if the software application (SIMA) is active in the terminal (1);
or
- the management module module (7) causes an "unloading" of said software application (SIMA) or transmits, to the terminal (1), a command inhibiting the software application (SIMA).

4. Method according to any one of the previous claims, wherein if the terminal is already connected to the network (3) before the determination and authorisation steps:
- the determination step is carried out after the sending of messages or after a predetermined time after the sending of messages, or after a predetermined connection time,
- the authorisation step causes: the maintaining of the connection of the terminal to the network (3) if the conditions of configurations required to establish a connection of the terminal to the network (3) are met or the disconnection of the terminal to the network (3) if the conditions of configurations required to establish a connection of the terminal to the network (3) are not met.

5. Method according to any one of the previous claims, wherein said software application (SIMA) is stored in a memory of a SIM card (4) of the terminal and wherein said software application (SIMA) is configured to be executed on a microcontroller of the SIM card (4).

6. Method according to any one of the previous claims, wherein the step of determining whether conditions of configurations required to establish a connection of the terminal to the network (3) are met comprises a step of comparing at least one profile condition to at least one piece of context data available in the terminal (1) and which characterises the context of connection of the terminal to the network (3) and wherein each condition is associated with a parameter, the parameter being taken from: a time slot defining at least one time slot in which the terminal (1) is allowed to connect to the network (3), a time slot defining at least one time slot in which the terminal (1) is not allowed to connect to the network (3), days defining at least one day of the week on which the terminal (1) is allowed to connect to the network (3), days defining at least one day of the week on which the terminal (1) is not allowed to connect to the network (3), a number of tries defining a number of attempts authorised upon a failure of an attempt to connect or wherein the parameter relates to a maximum connection time of the terminal (1) to the network (3) or a maximum connection time of the terminal (1) to the network (3) after the sending of the previous message or wherein at least one of the parameters relates to a maximum quantity of data that can be transmitted during the same connection or a maximum number of messages that can be transmitted during the same connection.

7. Method according to any one of the previous claims, comprising the following steps before the determination and authorisation steps carried out in the terminal (1): receiving, in the terminal (1), a download message comprising said software application (SIMA) that can be executed in the terminal (1) and is configured to carry out at least the authorisation step in such a way as to manage the connection of the terminal (1) to the network (3), wherein the download message comprising the software application (SIMA) is sent by said module (7) for managing the connectivity of the terminal (1) positioned in a cellular communication network (3) and being remote from the terminal (1).

8. Method according to any one of the previous claims, comprising the following steps are carried out in the terminal (1): receiving, from a management module (7) remote from the terminal (1), a message inhibiting the determination and authorisation steps carried out in the terminal (1).

9. Module (7) for managing the connectivity of at least one terminal (1) of the type that can be connected to a cellular communication network (3), in a cellular communication network (3), the management module (7) being remote from the terminal (1), **characterised in that** it comprises an emission means configured to send, to a connection module responsible for the radio connection of a terminal (1) to the cellular communication network (3), a signalling message ordering a disconnection of the terminal (1),
and wherein the management module (7) is configured to determine whether the sending of the signalling message ordering a disconnection of the terminal (1) actually causes a disconnection of the terminal (1); and if the sending of the signalling message ordering a disconnection of the terminal (1) does not cause a disconnection of the terminal (1), then the management module (7) is configured to send a message for activating a software application (SIMA) that is executed in the terminal (1) and carries out at least a step of authorising the connection of the terminal (1) to the network (3).

10. Management module according to the previous claim, comprising a download means configured to download said software application (SIMA) to a SIM card (4) of the terminal (1) and wherein the download means is configured to download said software application (SIMA) onto the microcircuit card (4) of said terminal (1) during a first connection of the terminal (1) to the cellular communication network (3).

11. Management module according to the previous claim, further comprising a database saved in data-storage means, indexed by IMSI subscription identifier, the database storing said software application (SIMA).

12. Management module according to any one of the previous two claims, wherein the download means further comprises a sending means configured to send a message using the SMS message short message service protocol or the unstructured supplementary service data protocol (USSD message) or the general packet radio service protocol, GPRS, in order to download said software application (SIMA) via an SMS message or a USSD message sent to said terminal (1) via the cellular communication network (3).

13. Management module according to any one of the previous four claims, wherein said emission means is designed in such a way as to not send a signalling message ordering a disconnection of the terminal (1) if said software application (SIMA) is active on said terminal (1).

14. Management module according to any one of the previous five claims, wherein the terminal (1) is a machine terminal (1), and wherein the management module (7) is contained in a module (MLR) that comprises, in addition to the management module (7), an HLR location register module and an EIR equipment identity register module.

15. Management module according to any one of the previous six claims, wherein the signalling message ordering a disconnection of the terminal (1) is a "MAP-cancel-location" message having a type of ending positioned at "subscription withdrawn" "subscription withdrawn".
